# EUROPEAN PATENT APPLICATION

(11) **EP 1 377 052 A1**
(43) Date of publication of application: **02.01.2004**
(21) Application number: 02708634.7
(22) Date of filing: 20.03.2002
(51) Int. Cl.: H04N 5/91

(54) **VIDEO SIGNAL PROCESSOR AND VIDEO CAMERA**

(30) Priority: 26.03.2001 JP 2001087707
(71) Applicant: MATSUSHITA ELECTRIC INDUSTRIAL CO., LTD., Kadoma-shi, Osaka 571-8501 (JP)
(72) Inventor: TAKEMOTO, Shinji, Katano-shi, Osaka 576-0021 (JP)
(74) Representative: TER MEER STEINMEISTER & PARTNER GbR
(86) International application number: PCT/JP2002/002690
(87) International publication number: WO 2002/078335

(57) **Abstract**

A previously picked-up video signal stored in a memory (51) and a presently picked-up video signal output from a photoelectric converter (10) are switched by a change-over switch (140), while being continuously displayed on a monitor display (150). By doing so, a shooter can determine whether he/she admits the presently picked-up video signal. Even an inexperienced shooter can easily carry out the shooting and recording operation for each frame with high accuracy for an improved working efficiency.

## Description

### TECHNICAL FIELD

The present invention relates to a video signal processor and a video camera used for animation shooting, etc.

### BACKGROUND ART

Conventionally, a video camera and a video signal processor that can be suitably used for shooting special effects such as animation with a clay work have been developed. The video camera and the video signal processor conduct the animation shooting in the manner described below. First, the motion of an object is analyzed at each one frame time point. The pose of the object at each frame time point thus analyzed is realized using the object itself. The pose is realized by molding a clay work or the like. The pose of the object at each frame time point thus realized is picked up by shooting. The video signal obtained by shooting is recorded on a recording medium such as a video tape for each frame. This recording by shooting is called frame shoot recording.

In analyzing a motion, it is crucial to ascertain the degree to which the object moves from one frame to another. In ascertaining the motion, experience and intuition are used for estimation. In the case where the motion of an object is considered abnormal on the display screen after shooting, it is corrected by reshooting or editing.

In order to reduce reshooting and editing, the continuity of the motion of the object is required to be grasped with high accuracy at the time of shooting. This is achieved by carrying out an idea described below. Specifically, animation images, including a plurality of frame images obtained by reproducing the video tape, are intermittently displayed on a monitor display. On a screen of the monitor display, the same point on the object is marked at each pose. A person in charge of shooting and a person in charge of molding (hereinafter collectively referred to as a shooter) grasp the particular motion quantitatively by measuring the direction and amount of the motion between poses by attaching marks.

In the conventional frame shoot recording conducted this way, however, a very high skill is required on the part of the shooter to maintain a high and constant level of accuracy of direction and amount of the motion of the object. Even with animation images picked up by a shooter having some degree of skill, continuous display (normal display) of the images often results in a failure as the directivity or amount of the motion develops an imbalance leading to a discontinuous motion. To secure images of smooth movement, therefore, the requirement of partial reshooting or editing is often unavoidable.

The object of this invention is to enable the frame shoot recording in a simple fashion with high accuracy even by an inexperienced user.

### DISCLOSURE OF THE INVENTION

(1) A video signal processor and a video camera according to this invention comprise a memory for storing a video signal input from the outside of the apparatus, a selector for selecting a previously picked-up video signal output from the memory and a presently picked-up video signal input from the outside of the apparatus, a display unit for converting the previously picked-up video signal or the presently picked-up video signal selected by the selector into an image and displaying the image, and a controller for controlling an operation of writing the presently picked-up video signal into the memory, an operation of reading the previously picked-up video signal from the memory and the operation of the selector selecting the previously picked-up video signal and the presently picked-up video signal.

The video signal processor and the video camera configured as described above have the functions described below. Specifically, the directivity and amount of the motion can be positively measured by admitting the image difference between the previously picked-up video signal and the presently picked-up video signal in a simple fashion. As a result, the composition of the object can be determined while constantly maintaining the direction and amount of the motion with high accuracy. In the shooting operation, therefore, a failure such as loss of the motion continuity can be reduced. Even an inexperienced user, therefore, can shoot each frame both easily and accurately to improve a working efficiency. As described above, with the video signal processor according to the invention, unlike in the conventional video signal processor, the need to estimate the motion of an object based on experience and intuition is eliminated.

In exhibiting the functions described above, the controller preferably performs the control operation of causing the selector to select the previously picked-up video signal and the presently picked-up video signal for each frame.

Also, in order to exhibit the functions described above, the video signal processor further comprises an operating unit to receive an input from an operator of the video signal processor indicating whether the operator admits a display status of the display unit. The controller, upon receipt of an admission input to the operating unit, preferably further performs a control operation of storing the presently picked-up video signal in the memory in a state corresponding to the previously picked-up video signal.

Also, the video signal processor comprises a recorder for recording on a recording medium the video signal stored in the memory. The controller preferably further performs such a control operation that the previously picked-up video signals stored in the memory are read at a time from the memory and recorded on the recording medium by the recorder. By doing so, the shooting by cuts and connections is carried out less often and a reproduction failure which otherwise might be caused by a reduced track can be suppressed. Further, the images in the state stored in the memory can be recorded on the recording medium after simple editing. As a result, only the previously picked-up video signal admitted by the shooter can be recorded on the recording medium selectively and efficiently with a small track reduction.

The memory can be configured of either a semiconductor memory or a hard disk drive or a recording and reproducing device using an IC memory card. The selector can be configured of a semiconductor switch or a mechanical relay. The display unit may be either of a CRT or a liquid crystal display and not specifically limited in configuration. The controller can be configured of a microcomputer. A shooting unit can be configured of a CCD, an image pickup tube, or an imaging device using a CMOS image sensor.

### BRIEF DESCRIPTION OF THE DRAWINGS

Fig. 1 is a block diagram showing a configuration of a video signal processor according to an embodiment of the invention.
Fig. 2 is a time chart for explaining a specific example of an embodiment.
Fig. 3 is a time chart for explaining another specific example of the embodiment.
Fig. 4 is a block diagram showing a configuration of a video signal processor according to another embodiment of the invention.
Fig. 5 is a block diagram showing a configuration of a video camera according to still another embodiment of the invention.
Fig. 6 is a block diagram showing a configuration of a video signal processor according to yet another embodiment of the invention.
Fig. 7 is a block diagram showing a configuration of a video signal processor according to a further embodiment of the invention.
Fig. 8 is a block diagram showing a configuration of a video signal processor according to a still further embodiment of the invention.
Fig. 9 is a block diagram showing a configuration of a video camera according to a yet further embodiment of the invention.

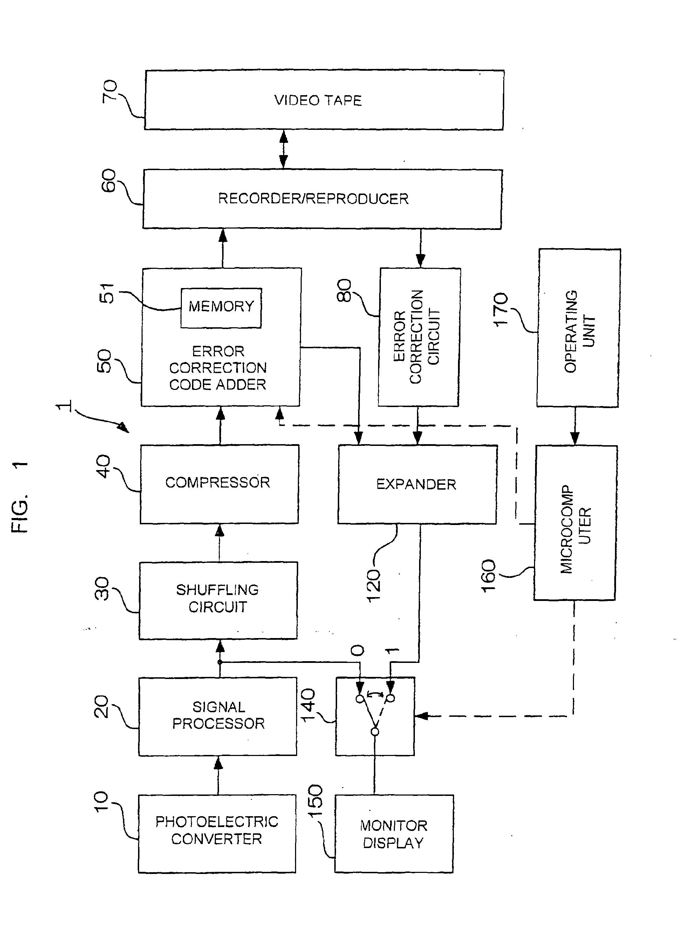

Fig. 1 is a block diagram showing a configuration of a video signal processor 1 according to this embodiment.
This video signal processor 1 is a single-unit video camera tape recorder.

The video signal processor 1 comprises a photoelectric converter 10 as an example of an imaging unit, a signal processor 20, a shuffling circuit 30, a compressor 40, an error correction code adder 50, a recorder/reproducer 60, a video tape 70 as an example of a recording medium, an error correction circuit 80, an expander 120, a change-over switch 140 as an example of a selector, a monitor display 150 as an example of a display unit, a microcomputer 160 as an example of a controller and an operating unit 170.

The photoelectric converter 10 is configured of a lens or a CCD not shown. A video signal obtained by the continuous or intermittent imaging operation of the photoelectric converter 10 is output to the signal processor 20. The video signal output from the photoelectric converter 10 will hereinafter be referred to as a presently picked-up video signal.

In the signal processor 20, a digital process and the like is applied to the presently picked-up video signal output from the photoelectric converter 10, which is then output to the shuffling circuit 30 and the change-over switch 140.

The shuffling circuit 30 shuffles each predetermined block of the presently picked-up video signal to maintain a constant compression rate with a simple circuit. The shuffling circuit 30 outputs a shuffled video signal to the compressor 40.

The compressor 40 compresses and encodes the presently picked-up video signal shuffled. The compressor 40 outputs a compressed video signal to the error correction code adder 50.

According to this embodiment, the DV system is employed for image compression of the presently picked-up video signal in the compressor 40. In the DV system, the compression scheme is implemented by only one picture based on intra-frame coding. The compressor 40 compresses the data amount of the presently picked-up video signal to about one fifth by compression coding.

The error correction code adder 50, after adding an error correction code to the presently picked-up video signal supplied from the compressor 40, outputs the resulting signal to the recorder/reproducer 60 or the expander 120.

The error correction code adder 50 includes a deshuffle unit, an error correction code unit (hereinafter referred to as the ECC unit), a write address generating unit and a read address generating unit. These units are not shown. The error correction code adder 50 includes a memory 51 of a semiconductor storage unit in addition to the aforementioned units not shown. The memory 51 is an example of the memory.

The deshuffle unit deshuffles the presently picked-up video signal compressed. The ECC unit adds an outer parity to the presently picked-up video signal compressed and deshuffled. The ECC unit causes the presently picked-up video signal with the outer parity added thereto to be stored in the memory 51. Further, the ECC unit reads the video signal with an outer parity added thereto from the memory 51, and outputs it to the recorder/reproducer 60 and the expander 120. The ECC unit adds an inner parity when reading the video signal from the memory 51. The video signal stored in the memory 51 is hereinafter referred to as the previously picked-up video signal.

The memory 51 has a storage area for sequentially storing a plurality of (say, 30) frames of video signals. The memory 51 thus has a storage area of a comparatively large capacity (several hundred megabytes, for example). The write address generating unit and the read address generating unit generate different addresses with an interlaced pair of odd and even frames when the ECC unit adds an outer parity and an inner parity. Thus, the memory 51 of the error correction code adder 50 can be used for holding the frame images. In the error correction code adder 50, therefore, video signals for a plurality of (say, 30) frames are updated while being constantly written in and read from the memory 51. The memory 51 can switch the destination of the output video signal between the recorder/reproducer 60 and the expander 120.

The recorder/reproducer 60 records the input previously picked-up video signal on the video tape 70 and reproduces the video signal recorded on the video tape 70. The recorder/reproducer 60, though not shown, includes a modulation circuit for modulating the previously picked-up video signal, a recording drum having a magnetic head, a motor for rotating the recording drum, and a servo circuit for automatically controlling the r.p.m., etc. of the rotative motor. In the recorder/reproducer 60 having this configuration, the previously picked-up video signals with an error correction code such as an outer parity or an inner parity added thereto are sequentially and continuously recorded on the video tape 770 and reproduced therefrom.

In the error correction circuit 80, the error of the video signal reproduced by the recorder/reproducer 60 is corrected based on the error correction code added to the reproduced video signal.

The expander 120 expands the previously picked-up video signal read out of the memory 51 or the reproduced video signal (video tape reproduction signal) output from the error correction circuit 80. The expander 120 outputs the expanded previously picked-up video signal and the reproduced video signal to the change-over switch 140.

In the change-over switch 140, one of the video signal (the previously picked-up video signal or the reproduced video signal) output from the expander 120 and the presently picked-up video signal output from the signal processor 20 is selected and output to the monitor display 150. The monitor display 150 produces and displays an image from the input video signal.

The microcomputer 160 controls the operation of writing the presently picked-up video signal into the memory 51 and the operation of reading the previously picked-up video signal stored in the memory 51 based on the input operation performed by the shooter on the operating unit 170. Also, the microcomputer 160 controls the select operation of the change-over switch 140.

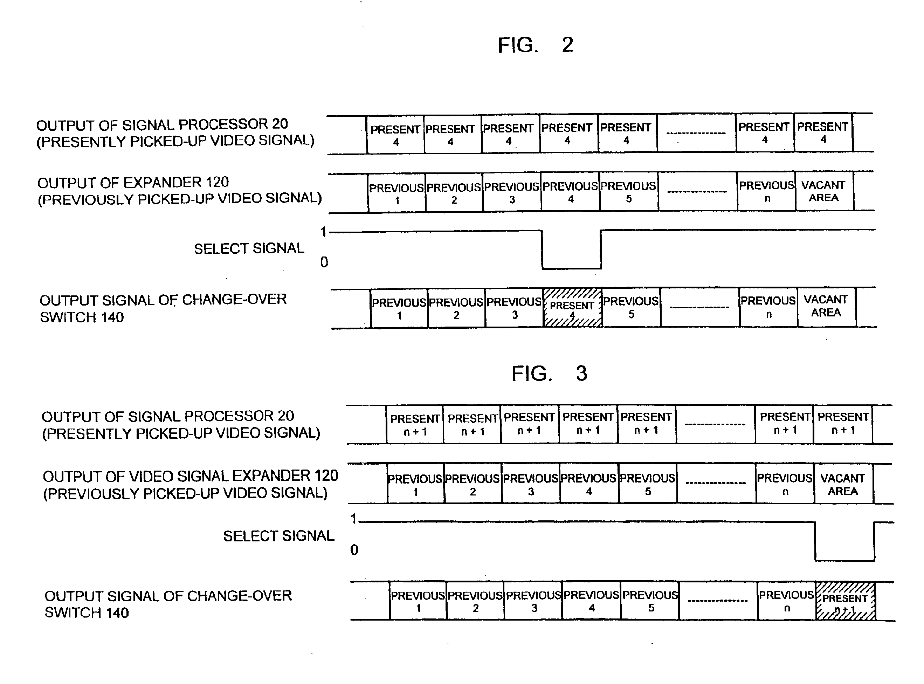

Next, the operation constituting the feature of the shooting using the video signal processor 1 will be explained with reference to Figs. 2 and 3. In Figs. 2 and 3, the output of the signal processor 20 corresponds to the presently picked-up video signal. The output of the expander 120, on the other hand, corresponds to the previously picked-up video signal. As to the select signal supplied from the microcomputer 160 to the change-over switch 140, level 0 corresponds to the selection of the output of the signal processor 20 (presently picked-up video signal) and level 1 to the selection of the output of the expander 120 (previously picked-up video signal).

In the imaging operation using this video signal processor 1, the pose of the object for each frame time is realized with the object itself first of all. The pose is realized by the mold worker molding a clay work, etc. The pose of the object thus realized for each frame time point is picked up as an image by the video signal processor 1. The video signal obtained by imaging is stored, frame by frame, in the memory 51. This imaging record operation will hereinafter be referred to as the frame imaging temporary record operation.

After a plurality of sessions of the frame imaging temporary record operation, a cluster of temporally continuous previously picked-up video signals (hereinafter referred to as the previously picked-up video signal group (previous 1 to previous n)) is stored in the memory 51. The previously picked-up video signal group (previous 1 to previous n) , after being stored in the memory 51, is read out and displayed on the monitor display 150. At the same time, the change-over switch 140 selects the output of the expander 120. The images of the previously picked-up video signal group displayed on the monitor display 150 are confirmed by the shooter. As the result of confirmation, the shooter may determine that the motion of the object is not complete.

This incompleteness of the motion may be eliminated by changing (replacing) the previously picked-up video signal (the previously picked-up video signal (previous 4), for example, in Fig. 2) at a temporally intermediate point of the previously picked-up video signal group. In the case where the shooter thinks so, the operation described below is performed.

The shooter notifies the microcomputer 160 of his/her intention to change the signal. At the same time, the frame position of the previously picked-up video signal (previous 4) desired to change is notified to the microcomputer 160. This intention is transmitted by being input through the operating unit 170.

Under this condition, the shooter picks up a replacement image for the previously picked-up video signal (previous 4) desired to change. The presently picked-up video signal (present 4) thus obtained by the photoelectric converter 10 through the image pickup operation is output to the change-over switch 140 from the signal processor 20. In the process, the change-over switch 140 is set in a state ready to select the output of the signal processor 20 in compliance with an instruction from the microcomputer 160. Then, the replacement image of the presently picked-up video signal (present 4) is displayed on the monitor display 150. In this way, the shooter can confirm the replacement image of the presently picked-up video signal (present 4).

Under this condition, the shooter inputs a preview display instruction by way of the operating unit 170. In response to this instruction, the microcomputer 160 outputs an instruction to read the previously picked-up video signal group (previous 1 to previous n) to the error correction code adder 50. The error correction code adder 50 that has received this instruction from the microcomputer 160 reads the previously picked-up video signal group (previous 1 to previous n) from the memory 51. The previously picked-up video signal group (previous 1 to previous n) thus read out is expanded by the expander 120 and input to the change-over switch 140.

In the process, the change-over switch 140 is already supplied with the next change-over instruction from the microcomputer 160. Specifically, the aforementioned instruction allows the output (presently picked-up video signal (present 4)) of the signal processor 20 to be selected only at the frame time point of the previously picked-up video signal (previous 4) desired to change. At other than this frame time point, therefore, the output (previously picked-up video signal group (previous 1 to previous n)) of the expander 120 is selected in compliance with the same instruction.

In response to this instruction, the change-over switch 140 outputs by switching between the previously picked-up video signal group (previous 1 to previous n) and the presently picked-up video signal (present 4) to the monitor display 150. As a result, the images described below are displayed on the monitor display 150. Specifically, at the frame time point instructed by the shooter to change a particular previously picked-up video signal, the image of the presently picked-up video signal (present 4) is displayed on the monitor display 150, while the images of the previously picked-up video signal group (previous 1 to previous n) are displayed on the monitor display 150 at the other frame time points. Thus, the monitor display 150 displays an image of the previously picked-up video signal group (previous 1 to previous n) in which the previously picked-up video signal only at the frame time point desired to change is replaced by the presently picked-up video signal (present 4). The shooter can thus confirm the motion of the image by visually checking the particular image partially changed.

The shooter, visually confirming from the display on the monitor display 150 that the partially changed image is free of incomplete motion, inputs a record instruction by way of the operating unit 170. Once the record instruction is input by way of the operating unit 170, the microcomputer 160 outputs the record instruction to the error correction code adder 50. Upon receipt of this record instruction, the error correction code adder 50 updates only the previously picked-up video signal (previous 4) at the frame time point desired to change, among the previously picked-up video signal group (previous 1 to previous n) recorded on the memory 51, to the presently picked-up video signal (present 4).

A basically similar process is executed, as shown in Fig. 3, also in the case where it is desired to add a presently picked-up video signal (present n+1) at the temporal tail end of the previously picked-up video signal group (previous 1 to previous n). Specifically, assume that the previously picked-up video signal group produced by one or more sessions of the frame imaging temporary record operation is stored on the memory 51, and subsequently a video signal making up a temporal continuation is added to the previously picked-up video signal (previous n) located at the temporal tail end of the previously picked-up video signal group (previous 1 to previous n). The operation described below is performed.

The shooter notifies the microcomputer 160 of his/her intention to add the video signal. This intention is transmitted by being input through the operating unit 170.

Under this condition, the shooter picks up an image desired to add. Then, the resulting presently picked-up video signal (present n+1) obtained by the photoelectric converter 10 is output from the signal processor 20 to the change-over switch 140. In the process, the change-over switch 140 is set in a state ready to select the output of the signal processor 20 in response to an instruction from the microcomputer 160. An image of the presently picked-up video signal (present n+1) to be added is displayed on the monitor display 150. Thus, the shooter can confirm the image of the presently picked-up video signal (present n+1) used for change.

Under this condition, the shooter inputs a preview display instruction through the operating unit 170. In response to this instruction, the microcomputer 160 instructs the error correction code adder 50 to read the previously picked-up video signal group (previous 1 to previous n) from the memory 51. The error correction code adder 50 that has received this instruction from the microcomputer 160 reads out the previously picked-up video signal group (previous 1 to previous n) from the memory 51. The previously picked-up video signal group (previous 1 to previous n) thus read out is expanded by the expander 120, and then input to the change-over switch 140.

At the same time, the change-over switch 140 is supplied with the next change-over instruction from the microcomputer 160. This instruction allows the output of the signal processor 20 (presently picked-up video signal (present n+1)) only after the lapse of the frame time of the previously picked-up video signal group (previous 1 to previous n). At the other frame time points, the instruction is issued to select the output of the expander 120 (previously picked-up video signal group (previous 1 to previous n)).

In response to this instruction, the change-over switch 140 switches between the previously picked-up video signal group (previous 1 to previous n) and the presently picked-up video signal (present n+1) and outputs the resulting signal to the monitor display 150. As a result, the image described below is displayed on the monitor display 150. Specifically, the images of the previously picked-up video signal group (previous 1 to previous n) are displayed on the monitor display 150, immediately after which the image of the presently picked-up video signal (present n+1) is continuously displayed on the monitor display 150. The shooter can confirm the motion of the images by visually checking the finally added image of the presently picked-up video signal (present n+1).

The interval at which the previously picked-up video signal group (previous 1 to previous n) and the presently picked-up video signal (present n+1) are switched with each other by the change-over switch 140 can be arbitrarily set by the microcomputer 160. The switching interval is set, for example, in such a manner that the image displayed on the monitor display 150 is free of flickering.

In the case where the shooter visually checking the image displayed on the monitor display 150 recognizes that the added image is free of incomplete motion, the shooter inputs a recording instruction by way of the operating unit 170. Once the recording instruction is input via the operating unit 170, the microcomputer 160 outputs a recording instruction to the error correction code adder 50. The error correction code adder 50 that has received this recording instruction adds the presently picked-up video signal (n+1) to the tail end of the previously picked-up video signal group (previous 1 to previous n) recorded on the memory 51.

In the manner described above, the presently picked-up video signal (say, signal (present 4)) is recorded as a replacement at the intermediate portion of the previously picked-up video signal group (previous 1 to previous n) or the presently picked-up video signal (present n+1) is additionally recorded at the tail end of the previously picked-up video signal group (previous 1 to previous n). In the case where the presently picked-up video signal (present 4) or (present n+1) fails to be admitted by the shooter (by way of the operating unit 170), on the other hand, the microcomputer 160 disposes of the presently picked-up video signal (present 4) or (present n+1), as the case may be, without it being written in the memory 51.

As described above, in the video signal processor 1, the imaging video signals generated by repeated imaging operation can be written by being updated in the memory 51. In addition, through this update and write operation, the previously picked-up video signal group for a plurality of frames (say, 30 frames) can be stored in the memory 51.

The above-mentioned recording operation performed on the memory 51 enables the following operation of the video signal processor 1. Specifically, the video signals obtained by a plurality of imaging sessions can be recorded at a time on the video tape 70. As a result, the editing points of the video tape 70 are reduced on the one hand and the track reduction due to a head mounting error or a tracking error is suppressed on the other hand, thereby producing an improved reproduced signal.

The following advantages are also achieved. Specifically, the previously picked-up video signal group primarily stored in the memory 51 is displayed on the monitor display 150, whereby it becomes possible to positively grasp the direction and amount of the motion between the images of the previously picked-up video signal group and the image of the presently picked-up video signal. Also, the direction and amount of the motion in the previously picked-up video signal group stored in the memory 51 can be set in order with high accuracy. This way, only the previously picked-up video signal group admitted as a superior motion by the shooter can be read out of the memory 51 and recorded on the video tape 70. In the video signal processor 1, therefore, the motion of an object in a displayed image to be recorded finally on the video tape 70 is not required to be estimated based on experiments and intuition before being recorded on the video tape 70. As a result, the chance of making an error by recording an image lacking the motion continuity on the video tape 70 is substantially avoided.

In the case where images for each frame are shot individually by the special-effects shooting like the animation shooting, the recording control operation performed by the video signal processor 1 works very effectively.

The contents of this invention are not of course limited to the embodiments described above, but the invention may be embodied also as described below.

In the embodiments described above, the write operation on the memory 51 is carried out only after the shooter admits the motion continuity of the update/add signal. As an alternative, however, the particular signal may be written in the memory 51 immediately after the update/add signal is input. In the case where the shooter admits the continuity of the motion for the update/adding signal after recording on the memory, the recording of the update/add signal on the memory 51 is maintained. In the case where no permission is given, on the other hand, the update/add signal is produced anew.

The embodiment of the invention described above assumes that a frame of a presently picked-up video signal corresponding to a previously picked-up video signal group is stored again in the memory 51. Nevertheless, the invention is also applicable to a video signal processor in which the presently picked-up video signal group obtained by the photoelectric converter 10 imaging a plurality of frames of video signals is stored again in the memory 51 in a way corresponding to the previously picked-up video signal group stored in the memory 51.

According to the embodiments described above, the previously picked-up video signal group is stored on the memory 51 of the error correction code adder 50. As an alternative, a memory dedicated to the frame image storage may be provided separately. This dedicated memory is preferably inserted between the compressor 40 and the error correction code adder 50, for example. In such a case, the video signal of a frame image read from the dedicated memory is output to the expander 120.

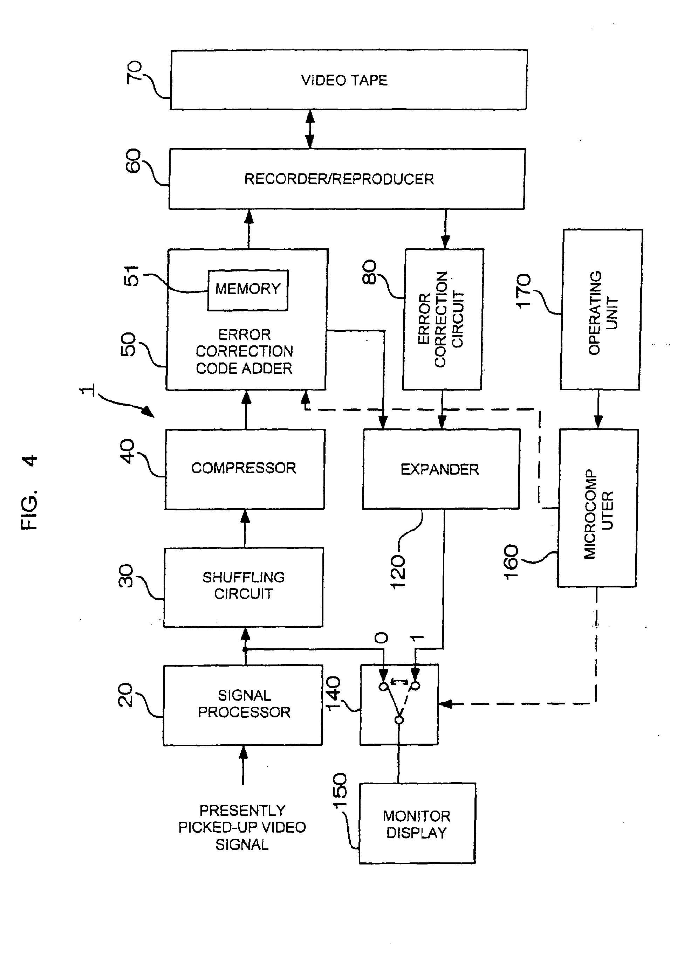

Also, in the embodiments described above, the video signal processor 1 is referred to as a single-unit video camera recorder. As shown in Fig. 4, however, the invention is also applicable to a video signal processor 200 of a separate camera type in which the photoelectric converter 10 is separated from the video signal processor 1. In the video signal processor 200, the presently picked-up video signal is input to the video signal processor 200 as an external input signal from an external video camera recorder. In this point of signal processing, the video signal processor 200 is different from the video signal processor 1. In the other points of signal processing, however, the video signal processor 200 is similar to the video signal processor 1.

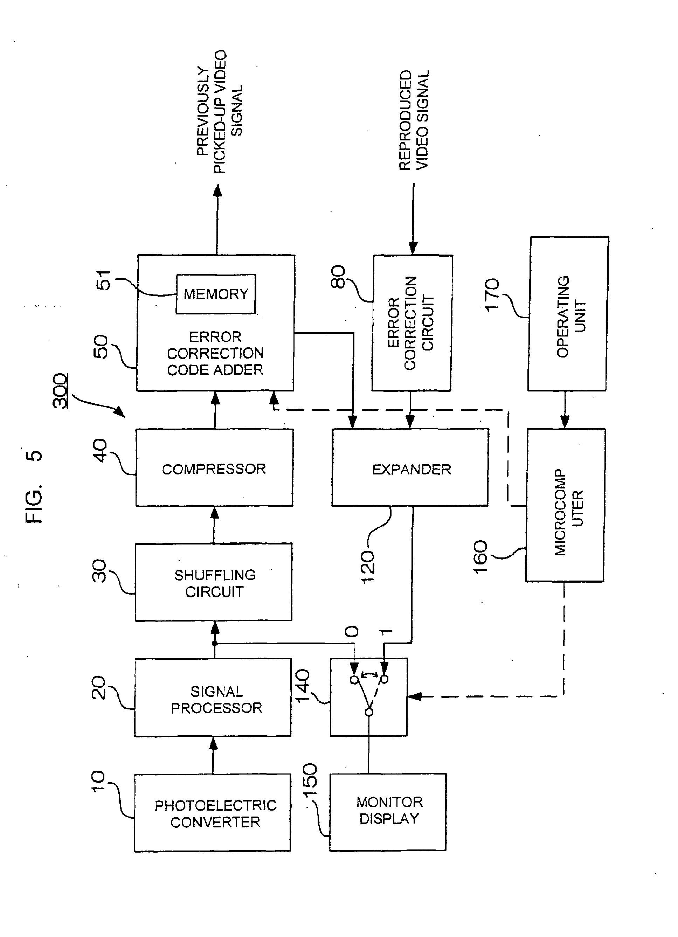

As shown in Fig. 5, the invention can be embodied as a video camera 300 in which the recorder/reproducer 60 is separated from the video signal processor 1. In the video camera 300, the previously picked-up video signal stored in the memory 51 is output toward an external recorder/reproducer from the memory 51. At this point, the video camera 300 processes the signal differently from the video signal processor 1. In other signal processing operation, however, the video camera 300 is similar to the video signal processor 1.

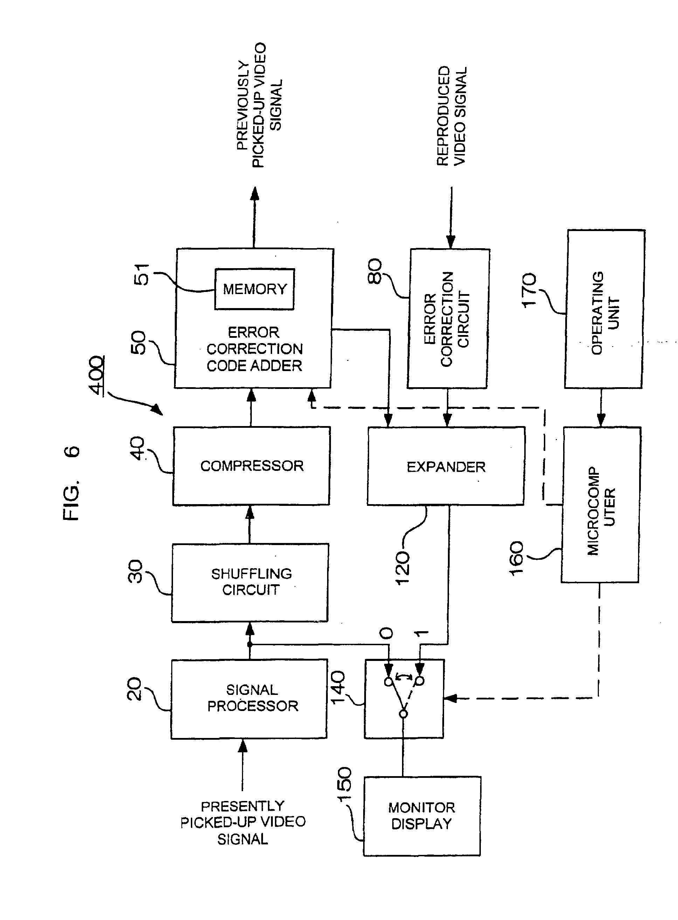

Also, as shown in Fig. 6, the invention can be embodied as a video signal processor 400 in which the photoelectric converter 10 and the recorder/reproducer 60 are separated from the video signal processor 1. In the case of the video signal processor 400, the presently picked-up video signal is input to the video signal processor 400 from an external video camera unit. Also, the previously picked-up video signal stored in the memory 51 is output toward an external recorder/reproducer from the memory 51. At this point, the signal processing in the video signal processor 400 is different from that in the video signal processor 1. In the remaining signal processing operation, however, the video signal processor 400 is similar to the video signal processor 1.

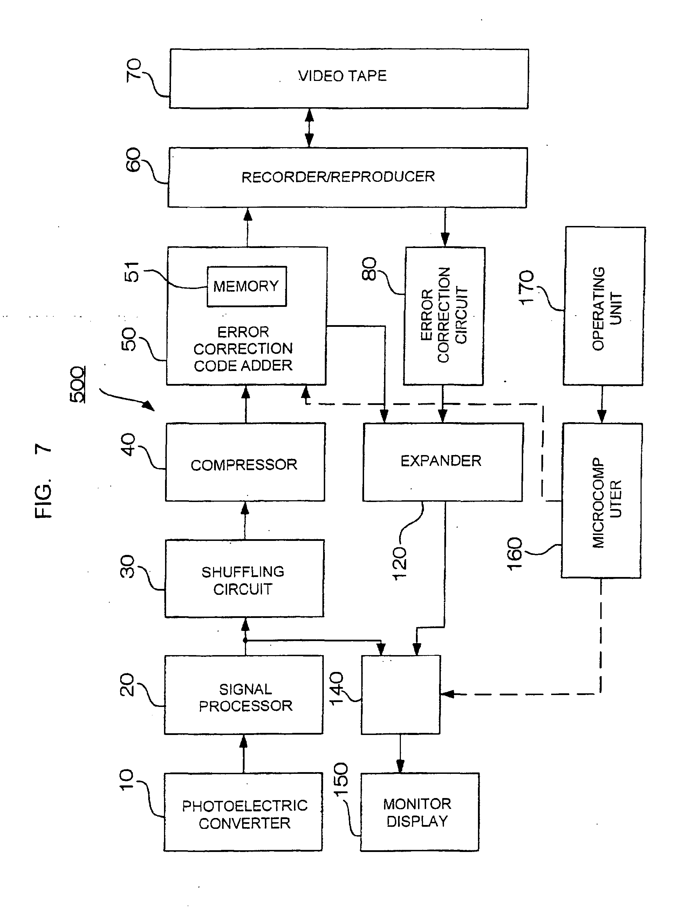

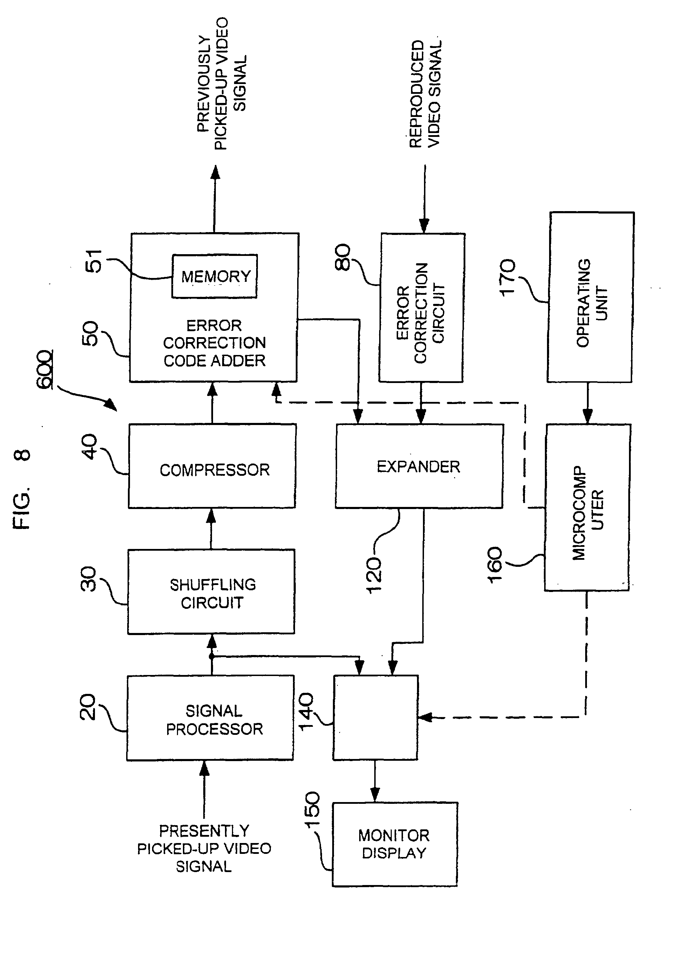

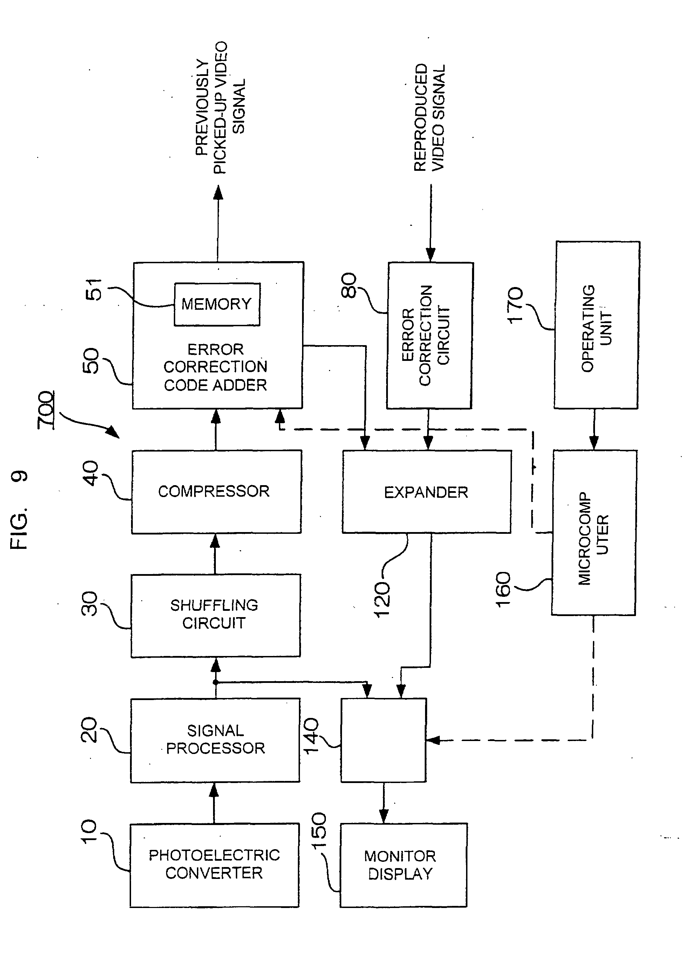

Also, in each of the embodiments described above, the video signal processor 1, 200, 400 or the video camera 300 according to the invention comprises a change-over switch 140 as an example of the selector. Nevertheless, as in a video signal processor 500 shown in Fig. 7, a video signal processor 600 shown in Fig. 8 or a video camera 700 shown in Fig. 9, an adder 140' may replace the change-over switch 140 (selector). In the video signal processor 500, 600 or the video camera 700, however, the adder 140' is arranged at a circuit position equivalent to the change-over switch 140.

The above-mentioned configuration has the advantage described below. Specifically, the previously picked-up video signal and the presently picked-up video signal can be added to each other by the adder 140' at an arbitrary addition rate, and displayed on the monitor display 150. By doing so, the previously picked-up video signal and the presently picked-up video signal can be displayed as a synthetic still image superposed one on the other on a single display screen (still image) of the monitor display 150. As a result, the animation shooting work can be conducted still more efficiently.

Also, unlike in the video signal processors according to the embodiments described above in which the video signal is compressed and recorded, the invention is applicable also to a video signal processor in which the video signal is stored directly without being compressed. The apparatus according to the invention can be configured, for example, using the memory of the ECC, thereby producing a similar effect to the aforementioned embodiments.

Further, the embodiments described above use the video tape 70 as a recording medium. Nevertheless, the recording medium is not limited to the video tape, but can be various. For example, the invention is applicable also to an apparatus using such means as a hard disk drive or an optical disk capable of recording the video signal in nonlinear form.

### INDUSTRIAL APPLICABILITY

As described above, with a video signal processor according to the invention, the special-effect shooting such as the animation shooting can be carried out easily and accurately. Also, the complex jobs such as the reshooting or the editing are eliminated, thereby improving the working efficiency. Further, since the editing work is not necessary, the need of an editing device is also eliminated which otherwise might be required for the same job. Furthermore, since the editing work which causes a deteriorated image quality is eliminated, the video signal can be recorded on a recording medium as an image of high quality.

## Claims

1. A video signal processor comprising:
a memory for storing a video signal input from the outside of an apparatus;
a selector for selecting a previously picked-up video signal output from the memory and a presently picked-up video signal input from the outside of the apparatus;
a display unit for converting the previously picked-up video signal or the presently picked-up video signal selected by the selector into an image and displaying the image; and
a controller for controlling an operation of writing the presently picked-up video signal on the memory, an operation of reading the previously picked-up video signal from the memory and the operation of the selector selecting the previously picked-up video signal or the presently picked-up video signal.

2. A video signal processor as claimed in claim 1, wherein the controller controls the operation of the selector selecting the previously picked-up video signal and the presently picked-up video signal by frame.

3. A video signal processor as claimed in claim 1, further comprising an operating unit for receiving an input indicating whether an operator of the video signal processor admits a display status of the display unit or not;
wherein the controller receives the input indicating the admission or non-admission through the operating unit and controls an operation of storing the presently picked-up video signal on the memory in a state corresponding to the previously picked-up video signal.

4. A video signal processor as claimed in claim 3, further comprising a recorder for recording on a recording medium the video signal stored on the memory;
wherein the controller further controls the operation of reading the previously picked-up video signals stored in the memory at a time and recording the previously picked-up video signals on the recording medium of the recorder.

5. A video signal processor comprising:
a memory for storing a video signal input from the outside of an apparatus;
an adder for adding a previously picked-up video signal output from the memory and a presently picked-up video signal input from the outside of the apparatus;
a display unit for converting a result of the addition by the adder into an image; and
a controller for controlling an operation of writing the presently picked-up video signal on the memory, an operation of reading the previously picked-up video signal from the memory and the operation of the adder adding the previously picked-up video signal and the presently picked-up video signal.

6. A video camera comprising:
an imaging unit for generating a video signal;
a memory for storing the video signal;
a selector for selecting a previously picked-up video signal output from the memory and a presently picked-up video signal output from the imaging unit;
a display unit for converting the previously picked-up video signal or the presently picked-up video signal selected by the selector into an image and displaying the image; and
a controller for controlling an operation of writing the presently picked-up video signal on the memory, an operation of reading the previously picked-up video signal from the memory and the operation of the selector selecting the previously picked-up video signal or the presently picked-up video signal.

7. A video camera as claimed in claim 6,
wherein the controller controls the operation of selecting the previously picked-up video signal or the presently picked-up video signal by frame.

8. A video camera as claimed in claim 6, further comprising an operating unit for receiving an input indicating whether an operator of the video camera admits a display status of the display unit or not;
wherein the controller receives an input indicating the admission or non-admission through the operating unit and controls an operation of storing the presently picked-up video signal on the memory in a state corresponding to the previously picked-up video signal.

9. A video camera as claimed in claim 6, further comprising a recorder for recording on a recording medium the video signals stored on the memory;
wherein the controller further controls the operation of reading the previously picked-up video signals stored in the memory at a time and recording the previously picked-up video signals on the recording medium of the recorder.

10. A video camera comprising:
an imaging unit for generating a video signal;
a memory for storing the video signal;
an adder for adding a previously picked-up video signal output from the memory and a presently picked-up video signal input from the imaging unit;
a display unit for converting a result of the addition by the adder into an image and displaying the image; and
a controller for controlling an operation of writing the presently picked-up video signal on the memory, an operation of reading the previously picked-up video signal from the memory and the operation of the adder adding the previously picked-up video signal and the presently picked-up video signal.
